(19) Europäisches Patentamt
European Patent Office
Office européen des brevets

(11) **EP 4 559 941 A1**

(12) **EUROPEAN PATENT APPLICATION**

(43) Date of publication:
**28.05.2025 Bulletin 2025/22**

(21) Application number: **23307041.6**

(22) Date of filing: **24.11.2023**

(51) International Patent Classification (IPC):
***C08F 2/48*** *(2006.01)* ***C09J 4/00*** *(2006.01)*
***C08F 4/40*** *(2006.01)* ***C08F 220/18*** *(2006.01)*
***C09J 133/06*** *(2006.01)*

(52) Cooperative Patent Classification (CPC):
(C-Sets available)
**C09J 4/00; C08F 2/48; C08F 2/50; C08F 4/40; C08F 220/1807; C09J 133/066** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Bostik SA**
**92800 Puteaux (FR)**

(72) Inventors:
- **CROMER, Brian**
**60280 VENETTE (FR)**
- **MAZAJCZYK, Jérôme**
**60280 VENETTE (FR)**
- **SIMON, Frédéric**
**60280 VENETTE (FR)**

(74) Representative: **Arkema Patent**
**Arkema France**
**DRD-DPI**
**51, Esplanade du Général de Gaulle**
**CS 10478**
**92907 Paris La Défense Cedex (FR)**

(54) **USE OF A CURABLE COMPOSITION IN A FLOW ACTIVATION DEVICE**

(57) The present invention relates to the use of a curable composition C in a flow activation device for the bonding, sealing or coating of substrate, wherein the curable composition C comprises:
- a (meth)acrylate compound;
- a sulfinate ;
- copper-based organic compound.

EP 4 559 941 A1

(52) Cooperative Patent Classification (CPC): (Cont.)

C-Sets
**C09J 4/00, C08F 220/1807;**
**C09J 133/066, C08K 5/0091;**
**C09J 133/066, C08K 5/41;**
C08F 220/1807, C08F 220/20, C08F 220/06,
C08F 230/02

## Description

FIELD

The present invention relates to the use of a curable composition in a flow activation device.

The present invention also relates to a method for bonding, sealing or coating a substrate using the curable composition in a flow activation device.

BACKGROUND

Radiation curable compositions are often utilized in a two-step process comprising 1: application of the adhesive onto substrate(s) and then 2: Irradiation with actinic radiation. However, this two-step process often requires complex manufacturing equipment, particularly for automated manufacturing processes, in order to achieve sequential application and irradiation. If the curable composition is dispensed into a constricted space such as a groove or corner, homogeneous irradiation may be difficult or impossible. Furthermore, actinic radiation can be deleterious to light sensitive substrates, such as opto-electronic sensors. Finally, irradiation after dispensation increases the risk of exposing humans (patients, operators, bystanders) to harmful actinic radiation.

Among radiation curable compositions, mention may be made of acrylic based compositions. Usually, these radically-polymerizable compositions cure rapidly (few seconds) which makes it impossible to control their pot life. Here, pot life is defined as the time after activation that an adhesive is workable, where activation may be accomplished mixing multiple adhesive components and/or exposure to actinic radiation. Besides, such compositions are typically used for transparent substrates in order to allow irradiation after the bonding of multiple substrates.

There also exist other radiation curable compositions such as epoxy-based compositions which generally cure more slowly than acrylic based compositions. They typically require a secondary curing step to achieve a complete cure within 3 to 7 days (such as heat, moisture, ...) which necessitate additional manufacturing equipment (oven, humidity control equipment, ...).

There is thus a need for a solution that allows to remedy to at least one of the above mentioned drawbacks.

More particularly, there is a need for a curable composition that allows avoiding deterioration of substrate and/or bonding of variety of substrates: opaque and transparent.

There is also a need for a curable composition that offers a greater flexibility of the end user for sealing, coating, bonding of substrates (for example by control of curing time/pot life).

DESCRIPTION OF THE INVENTION

The present invention relates to the use of a curable composition C in a flow activation device for the bonding, sealing or coating of substrate, wherein the curable composition C comprises:

- a (meth)acrylate compound M1;
- a sulfinate ;
- a copper-based organic compound.

Preferably, the pot life of the curable composition C is controlled by changing the dose of the actinic radiation.

The present invention also relates to a method for the bonding, sealing or coating of substrate, said method comprising the following steps:

- i) irradiating a curable composition C within a flow activation device with actinic radiation ;
- ii) dispensing the curable composition C onto a first substrate;
- iii) optionally varying the actinic radiation dose before and/or during step ii);
- iv) optionally joining with a second substrate within the pot life of the curable composition C;

wherein the curable composition C comprises:

  ◦ a (meth)acrylate compound M1;
  ◦ a sulfinate;
  ◦ a copper-based organic compound.

Preferably, the method does not comprise an additional secondary curing step such as for example moisture cure step, heating step. This will advantageously simplify the manufacturing process by eliminating equipment to accomplish

secondary cure (ovens, humidity control equipment, ...).

Preferably, the method comprises a step i') of setting the dose of the actinic radiation previous to step i). The setting step i') may be carried out electronically via a control unit.

The pot life is typically the time after activation where the composition is still workable.

The present invention also relates to a flow activation device comprising the curable composition C as defined above.

The present invention also relates to the use of a flow activation device for dispensing the curable composition C as defined above.

The following detailed description, preferred embodiments apply for both objects: use and method as defined above.

In particular, the following detailed description, preferred embodiments for the flow activation device, substrate, actinic radiation, pot life, and the curable composition C, apply both for the use and the method of the invention, without need to repeat it.

## Curable composition C

In the context of the invention, the term "alkyl" means a linear or branched hydrocarbon radical, preferably comprising from 1 to 20 carbon atoms. Examples include methyl, ethyl, propyl.

In the context of the invention, the term "C4-C20 alkyl" means a linear or branched alkyl comprising from 4 to 20 carbon atoms.

In the context of the invention, the term "alkenyl" means a linear or branched hydrocarbon radical comprising at least one double bond, said radical preferably comprising from 2 to 20 carbon atoms. Examples include propenyl, butenyl.

In the context of the invention, the term "alkynyl" means a linear or branched hydrocarbon radical comprising at least one triple bond, said radical preferably comprising from 2 to 20 carbon atoms.

In the context of the invention, the term "aryl" means a monocyclic or bicyclic aromatic radical, preferably comprising from 6 to 12 carbon atoms. Examples include phenyl.

In the context of the invention, the term "arylalkyl" means an alkyl group substituted by an aryl group, the arylalkyl preferably comprising from 7 to 20 carbon atoms. Example include benzyl.

In the context of the invention, the term "alkylaryl" means an aryl group substituted by an alkyl group, the alkylaryl preferably comprising from 7 to 20 carbon atoms.

In the context of the invention, the term "heteroaryl" means a monocyclic or bicyclic aromatic radical comprising at least one heteroatom such as for example O, S or N, and preferably comprising from 4 to 12 carbon atoms. Examples include thiophenyl, pyrrolyl, pyridinyl, indolyl or imidazolyl.

In the context of the invention, the term "cycloalkyl" means a monocyclic or polycyclic system, preferably mono or bicyclic, saturated, preferably comprising from 3 to 12 carbon atoms, the cycle being able to be fused or bridged in pairs, such as cyclopropyl, cyclopentyl, cyclohexyl.

In the context of the invention, the term "heterocycloalkyl" means a monocyclic or polycyclic system, preferably mono or bicyclic, saturated, preferably comprising from 3 to 12 carbon atoms and at least one heteroatom such as for example N, O or S, the cycle being able to be fused or bridged in pairs.

In the context of the invention, the term "cycloalkenyl" means a monocyclic or polycyclic system comprising at least one unsaturation, preferably comprising from 3 to 12 carbon atoms, the cycle being able to be fused or bridged in pairs.

In the context of the invention, the term "alkoxy" means a radical -O-alkyl.

### *Copper-based organic compound*

The copper-based organic compound is preferably a copper (II)-based organic compound.

The copper-based organic compound may comprise a halogen atom or not. Preferably, the copper-based organic compound does not comprise a halogen atom.

The copper-based organic compound may be selected from the group consisting of copper salt of formula (VII-1) or copper complex of formula (VII-2):

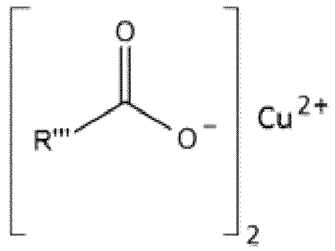

(VII-1)

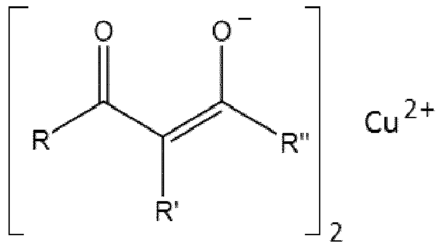

(VII-2)

wherein :

- R and R" each represent, independently of one another, an alkyl radical, a cycloalkyl radical, an aryl radical, a heteroaryl radical, said alkyl, cycloalkyl, aryl, heteroaryl radicals being optionally substituted by one or more halogen atoms such as for example one or more fluorine atoms;
- R' represents a hydrogen atom, an alkyl radical, a cycloalkyl radical, an aryl radical, a heteroaryl radical, or R and R' (or R' and R") can also be engaged in a single cycle comprising from 5 to 8 carbon atoms, said cycle possibly comprising at least one heteroatom (such as for example O, S ) ;
- R‴ represents an alkyl radical, a cycloalkyl radical, an aryl radical, a heteroaryl radical, said alkyl, cycloalkyl, aryl, heteroaryl radicals being optionally substituted by one or more halogen atoms such as for example by one or more fluorine atoms.

Among the copper salts of formula (VII-1), mention may be made of copper (II) acetate (for example anhydrous or monohydrate), copper (II) monofluoroacetate, copper (II) difluoroacetate, copper (II) trifluoroacetate (e.g. anhydrous or monohydrate), copper (II) hexanoate, copper (II) ethyl-2-hexanoate, and mixtures thereof.

According to a preferred embodiment, in formula (VII-1), R‴ represents an alkyl radical having from 1 to 20 carbon atoms, preferably from 1 to 7 carbon atoms, said alkyl being optionally substituted by a or several halogen atoms such as for example one or more fluorine atoms.

Among the copper complexes of formula (VII-2), mention may for example be made of copper (II) hexafluoroacetylacetonate ($Cu(hfacac)_2$), copper (II) trifluoroacetylacetonate ($Cu(tfacac)_2$), copper (II) acetylacetonate ($Cu(acac)_2$) and copper (II) bis(2-acetylcyclohexanonate), having respectively the following formulas:

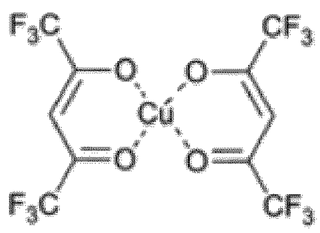

$Cu(hfacac)_2$

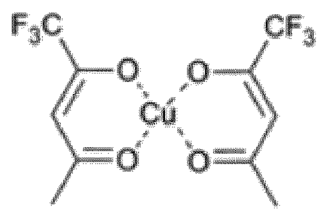

$Cu(tfacac)_2$

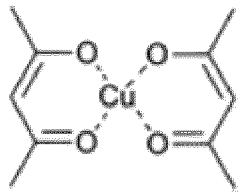

$Cu(acac)_2$

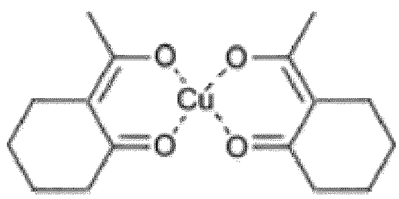

According to a preferred embodiment, in formula (VII-2):

- R represents an alkyl radical, a cycloalkyl radical, an aryl radical, a heteroaryl radical, preferably an alkyl radical;
- R' represents hydrogen;
- R" represents an alkyl radical optionally substituted by one or more halogen atoms, such as for example one or more fluorine atoms.

The copper-based organic compound is preferably a copper complex of formula (VII-2) and more particularly

copper (II) acetylacetonate ($Cu(acac)_2$).

The copper-based organic compound is typically used as an oxidizing agent.

The total content of copper-based organic compound, and in particular of formula (VII-1) or (VII-2) in the curable composition C can range from 0.05% to 5% by weight, preferably from 0.1% to 2% by weight, and even more preferably from 0.2% to 1% by weight relative to the total weight of the curable composition C.

Halogenated carboxylic acid or phosphorous-containing compound

The curable composition C may optionally comprise at least one halogenated carboxylic acid and/or a phosphorous-containing compound.

The halogenated carboxylic acid may be selected from the group consisting of: monohalogenated carboxylic acid (comprising one halogen atom), dihalogenated carboxylic acid (comprising two halogen atoms) or trihalogenated carboxylic acid (comprising three halogen atoms).

The halogenated carboxylic acid may be selected from the group consisting of: monochloracetic acid, monofluoroacetic acid, dichloroacetic acid, difluoroacetic acid, trichloroacetic acid, trifluoroacetic acid, and mixtures thereof.

Preferably, the halogenated carboxylic acid is selected from dichloroacetic acid, difluoroacetic acid, and mixtures thereof.

The phosphorous-containing compound has preferably the following formula $P(O)(OR^b)(OR^c)(OR^d)$, wherein $R^b$, $R^c$ or$R^d$ may be, independently of each other, a hydrogen, an alkyl, an aryl, a heteroaryl, an alkenyl, a cycloalkyl, said alkyl, aryl, heteroaryl, alkenyl, cycloalkyl being optionally substituted.

More preferably, at least one of $R^b$, $R^c$ or $R^d$ is hydrogen, and even more preferably at least one of $R^b$, $R^c$ or $R^d$ is alkyl, said alkyl being optionally substituted.

The substituent may be selected from the group consisting of alkyl, aryl, amino, hydroxyl, $-O-C(=O)-C(R^e)=CH_2$, $R^e$ being H or $CH_3$.

The phosphorous-containing compound is more preferably selected from the group consisting of: phosphoric acid, bis(2-ethylhexyl) hydrogen phosphate, 2-(methacryloyloxy)ethyl dihydrogen phosphate, bis(2-(methacryloyloxy) ethyl) hydrogen phosphate, bis(2-(acryloyloxy)ethyl) hydrogen phosphate, (2-(acryloyloxy)ethyl) dihydrogen phosphate, diethyl hydrogen phosphate, and mixture thereof.

Even more preferably, the phosphorous-containing compound is selected from bis[2-(methacryloyloxy)ethyl] phosphate, bis(2-ethylhexyl) phosphate and mixtures thereof.

Phosphorous-containing compound may be commercially available, for example from Sigma Aldrich.

When present, the total content of halogenated carboxylic acid or phosphorous-containing compound may range from 0.5 to 20 wt%, preferably from 0.5 to 10 wt%, and even more preferably from 0.5 to 2 wt% based on the total weight of the curable composition C.

More preferably, the curable composition C comprises a phosphorous-containing compound.

*(meth)acrylate compound M1*

The curable composition C comprises a (meth)acrylate compound M1.

The (meth)acrylate compound M1 may be a (meth)acrylate monomer, a (meth)acrylate oligomer, or a (meth) acrylate polymer.

Preferably, the (meth)acrylate compound M1 is a (meth)acrylate monomer.

The (meth)acrylate compound M1 can have the following formula (F):

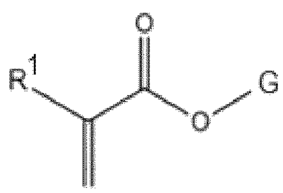

(F)

Wherein:

- $R^1$ represents H or methyl;
- G represents an organic radical.

Preferably, G is selected from the group consisting of alkyls, cycloalkyls, alkenyls, cycloalkenyls, alkylaryls,

arylalkyls or aryls, said alkyls, cycloalkyls, alkenyls, cycloalkenyls, alkylaryls, arylalkyls and aryls being optionally substituted for example substituted by an alkyl or a hydroxyl.

The (meth)acrylate compound M1 may have one of the following formulas (I), (II), (III), (IV) or (V):

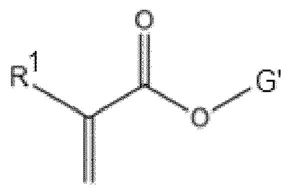
(I)

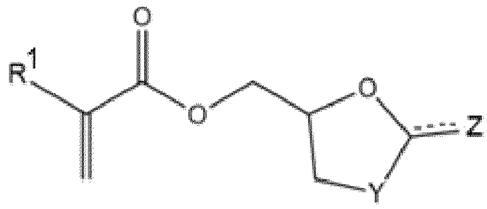
(II)

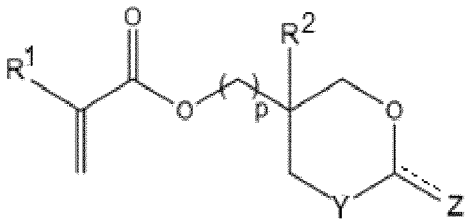
(III)

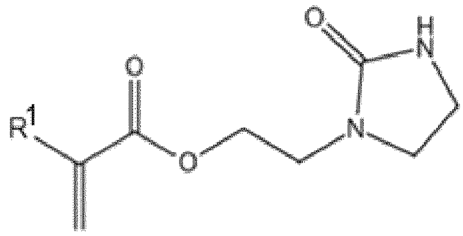
(IV)

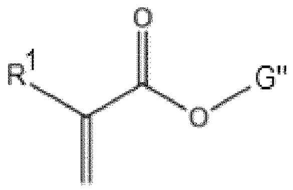
(V)

wherein :

- $R^1$ represents H or methyl;
- $R^2$ represents H, methyl or ethyl;
- p represents 0 or 1;
- Z represents H, O, S, an alkyl group, a benzyl group, an aryl group, or an alkoxy group;
- Y represents O, S, NH or $CH_2$;
- 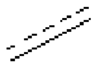 is a single bond or a double bond, provided that when Z represents O, then the bond is a double bond;
- G' is selected from the group consisting of alkyls, cycloalkyls, alkenyls, cycloalkenyls, alkylaryls, arylalkyls or aryls, said alkyls, cycloalkyls, alkenyls, cycloalkenyls, alkylaryls, arylalkyls and aryls being optionally substituted by a group alkyl, said group G' being characterized in that it does not comprise a heteroatom;
- G" is an alkyl substituted by OH group(s).

In the above-mentioned formula (I), G' may be selected from the group consisting of C1-C20 alkyls, preferably C4-C20 alkyls, cycloalkyls, alkenyls, cycloalkenyls, alkylaryls, arylalkyls or aryls, said alkyls , cycloalkyls, alkenyls, cycloalkenyls, alkylaryls, arylalkyls and aryls being optionally substituted by an alkyl group, said group G' being characterized in that it does not comprise a heteroatom.

In the aforementioned formula (I), G' is preferably chosen from the group consisting of alkyls (preferably C1-C20, and even more preferably C4-C20), cycloalkyls, arylalkyl or aryls, said alkyls, cycloalkyls, arylalkyl and aryls being optionally substituted by an alkyl group, said group G' being characterized in that it does not comprise a heteroatom. More preferably, G' is chosen from arylalkyl.

Among the compounds of formula (I), mention may be made for example of methyl (meth)acrylate, 2-ethylhexyl (meth)acrylate, n-butyl (meth)acrylate, heptyl (meth)acrylate , 2-tert-butylheptyl (meth)acrylate, octyl (meth)acrylate, 3-isopropylheptyl (meth)acrylate, nonyl (meth)acrylate, decyl (meth)acrylate, ( undecyl meth)acrylate, 5-methylundecyl (meth)acrylate, dodecyl (meth)acrylate, 2-methyldodecyl (meth)acrylate, tridecyl (meth)acrylate, 5 (meth)acrylate-methyltridecyl, tetradecyl (meth)acrylate, pentadecyl (meth)acrylate, hexadecyl (meth)acrylate, 2-methylhexadecyl

(meth)acrylate, heptadecyl (meth)acrylate, (meth) )5-isopropylheptadecyl acrylate, 4-tert-butyloctadecyl (meth)acrylate, 5-ethyloctadecyl (meth)acrylate, 3-isopropyloctadecyl (meth)acrylate, octadecyl (meth)acrylate, ( nonadecyl meth)acrylate, eicosyl (meth)acrylate, bornyl (metha)crylate, 2,3,4,5-tetra-t-butylcyclohexyl (meth)acrylate; benzyl (meth)acrylate, phenyl (meth)acrylate, 2-(2-ethoxyethoxy)ethyl (meth)acrylate, 2-phenoxyethyl (meth)acrylate, isobornyl (meth)acrylate, and their mixtures.

The preferred compound M1 of formula (I) is benzyl (meth)acrylate.

Among the compounds M1 of formula (II), mention may be made of the following monomers :

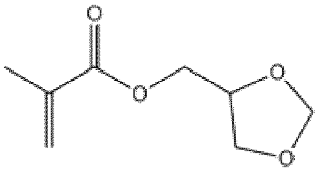

(II-A)

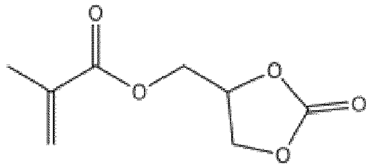

(II-B)

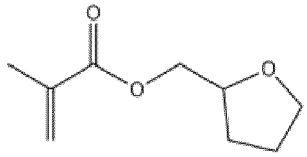

(II-C)

Among the compounds M1 of formula (III), mention may be made of the following monomers :

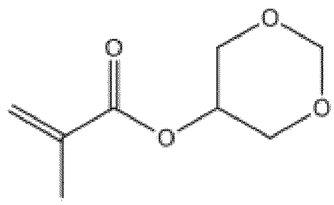

(III-A)

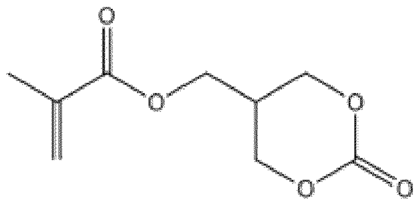

(III-B)

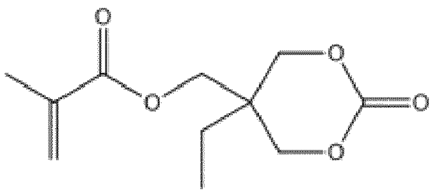

(III-C)

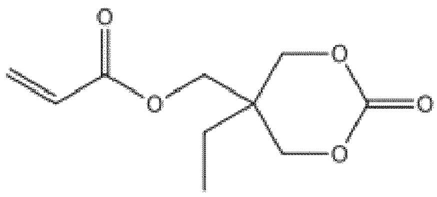

(III-D)

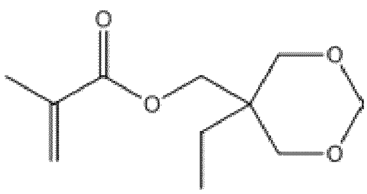

(III-E)

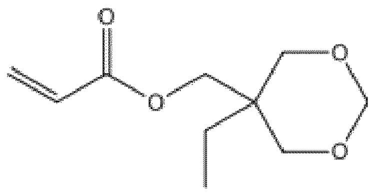

(III-F)

Among the compounds M1 of formula (II) or (III), the following monomers and their mixtures are prefered :

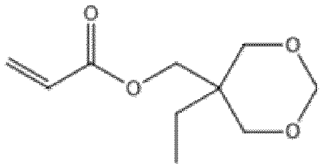 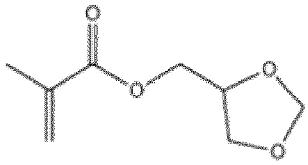 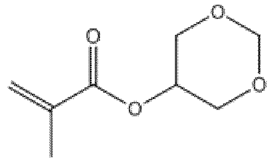

(III-F) (II-A) (III-A)

Among the M1 compounds of formula (V), we can for example cite hydroxyethyl(meth)acrylate, hydroxypropyl(meth)acrylate.

Preferably, the compounds M1 are chosen from the following compounds:

- those of formula (I) in which G' is chosen from cycloalkyls, arylalkyls;
- those of formula (V);
- mixtures thereof.

Even more preferably, the compounds M1 are chosen from the following compounds: benzyl (meth)acrylate, hydroxyethyl(meth)acrylate, and mixtures thereof.

The content of (meth)acrylate compound(s) M1 in the curable composition C can range from 5% to 99% by weight, preferably from 20% to 99%, even more preferably from 50% to 99%. by weight, and even more advantageously from 75% to 99% by weight relative to the total weight of said curable composition C.

The (meth)acrylate monomer M1 may or may not be a recycled monomer. The (meth)acrylate monomer M1 may or may not be fully or partially derived from a biological source.

*Photoinitiator P1 (optional)*

The curable composition C may further comprise a photoinitiator P1 (in addition to the copper-based organic compound and at least one (meth)acrylate compound M1 in particular).

Preferably, the curable composition C comprises a photoinitiator P1.

The photoinitiator can be any photoinitiator known to those skilled in the art. Under the action of UV-visible radiation, the photoinitiator typically generates radicals which will be responsible for initiating the photo-polymerization reaction, and in particular makes it possible to increase the efficiency of the photo-polymerization. This is of course chosen according to the light source used, depending on its ability to effectively absorb the selected radiation. For example, we can choose the appropriate photoinitiator based on its visible UV absorption spectrum. Advantageously, the source of the UV or visible radiation can be an LED.

The photoinitiator P1 can be selected from the group consisting of:

- type I photoinitiators chosen from:

  - the family of acetophenones and alkoxyacetophenones, such as for example 2,2-dimethoxy-2-phenylacetophenone and 2-diethyl-2-phenylacetophenone;
  - the family of hydroxyacetophenones, such as for example 2,2-dimethyl-2-hydroxyacetophenone, 1-hydroxycyclohexylephenyl ketone, 2-hydroxy-4'-(2-hydroxyethoxy)-2-methyl-propriophenone and 2- hydroxy-4'-(2-hydroxypropoxy)-2-methyl-propriophenone;
  - the family of alkylaminoacetophenones, such as for example 2-methyl-4'-(methylthio)-2-morpholino-propriophenone, 2-benzyl-2-(dimethylamino)-4-morpholinobutyrophenone and 2-(4-( methylbenzyl)-2-(dimethylamino)-4-morpholino-butyrophenone;
  - the family of benzoin ethers, such as for example benzyl, methyl benzoin ether and isopropyl benzoin ether;
  - the family of phosphine oxides, such as for example diphenyl-(2,4,6-trimethylbenzoyl)phosphine oxide (TPO), ethyl-(2,4,6-trimethylbenzoyl)phenylphosphine oxide ( TPO-L) and bis-(2,6-dimethoxybenzoyl)-2,4,4-trimethylphenyl phosphine oxide (BAPO);
  - the family of metallocenes, such as for example ferrocene, bis(eta 5-2,4-cyclopentadiene-1-yl)-bis(2,6-difluoro)-3-(1H-pyrrole-1-yl) -phenyl) of titanium and iron (cumene)cyclopentadienyl hexafluorophosphate.

- type II photoinitiators chosen from:

  - the benzophenone family, such as for example 4-phenylbenzophenone, 4-(4'-methylphenylthio)benzophenone,

1-[4[(4-benzoylphenyl)thio]phenyl]-2-methyl-2-[( 4-methylphenyl)sulfonyl]-1-propanone;
- the family of thioxanthones, such as for example isopropylthioxanthone (ITX), 2,4-diethylthioxanthone, 2,4-dimethylthioxantone, 2-chlorothioxanthone and 1-chloro-4-isopropylthioxanthone;
- the family of benzoyl formate esters, such as for example methylbenzoyl formate;
- the family of dibenzylidene ketones, such as for example p-dimethylaminoketone;
- the coumarin family, such as for example 5-methoxy and 7-methoxy coumarin, 7-diethylamino coumarin and N-phenylglycine coumarin;
- photoinitiators from the dye family such as for example triazines, fluorones, cyanines, safranins, 4,5,6,7-tetrachloro-3',6'-dihydroxy-2',4' ,5',7'-tetraiodo-3H-spiro[isobenzofuran-1,9'-xanthen]-3-one, pyrylium and thiopyrylium, thiazines, flavins, pyronins, oxazines, rhodamines;

- and their mixtures.

Preferably, the photoinitiator P1 is not chosen from those of the dye family.
According to a preferred embodiment, the photoinitiator P1 is chosen from:

- the family of phosphine oxides, such as for example diphenyl-(2,4,6-trimethylbenzoyl)phosphine oxide (TPO), ethyl-(2,4,6-trimethylbenzoyl)phenylphosphine oxide ( TPO-L) and bis-(2,6-dimethoxybenzoyl)-2,4,4-trimethylphenyl phosphine oxide (BAPO);
- the family of thioxanthones, such as for example isopropylthioxanthone (ITX), 2,4-diethylthioxanthone, 2,4-dimethylthioxantone, 2-chlorothioxanthone and 1-chloro-4-isopropylthioxanthone;
  the photoinitiator P1 being even more preferably chosen from diphenyl-(2,4,6-trimethylbenzoyl)phosphine oxide (TPO), and ethyl-(2,4,6-trimethylbenzoyl)phenylphosphine oxide ( TPO-L).

The nature and the concentration of photoinitiator P1 may be selected by the skilled person such that the curable composition C does not cure inside the flow activation device.
The total content of photoinitiator P1 can range from 0% to 5% by weight, preferably from 0% to 2% by weight, and even more preferably from 0% to 1% by weight relative to the total weight of the curable composition C.
If it is present in the curable composition C, the photoinitiator P1 content may be greater than or equal to 0.01%, for example greater than or equal to 0.1% by weight relative to the total weight of said curable composition.

*Sulfinate*

Preferably, the sulfinate has the following formula (VI):

$$[R^a\text{-}SO_2^-]_p,\ Q^{p+} \qquad \text{(VI)}$$

wherein :

- $R^a$ represents an aryl or heteroaryl radical, said heteroaryl and aryl being optionally substituted by at least one of the following radicals: F, OH, C(O)OMe, NHC(O)Me, methyl (Me), $CF_3$, OH or $SO_2^-$;
- Q represents Li, Na, K or Zn, preferably Na or K;
- p represents 1 or 2.

The compound of formula (VI) can be chosen from the following compounds:

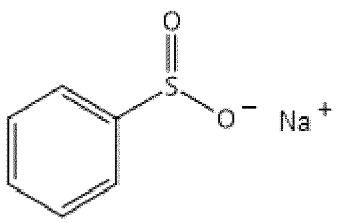

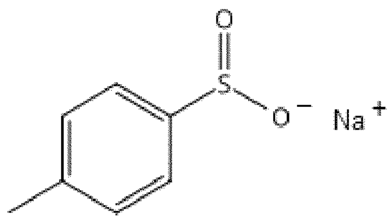

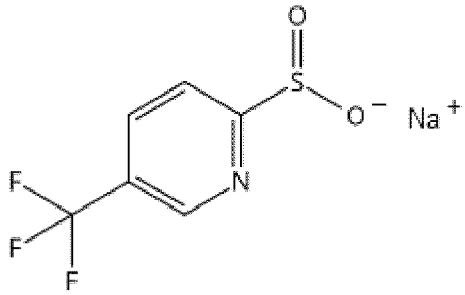

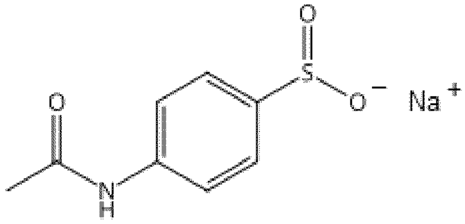

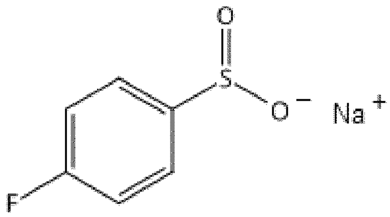

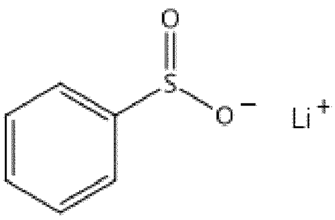

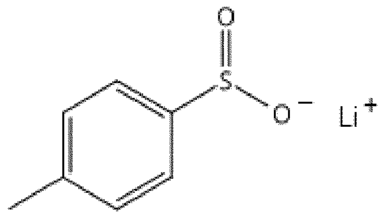

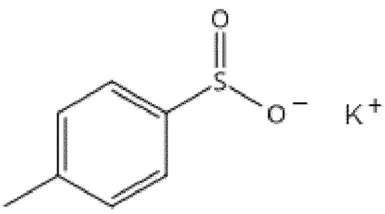

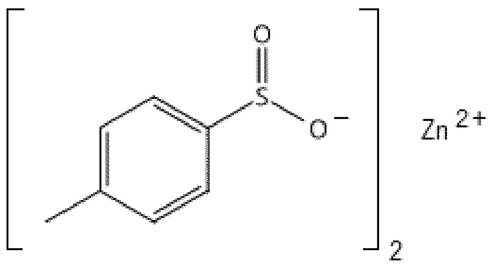

According to a preferred embodiment, the sulfinate is selected from the following compounds:

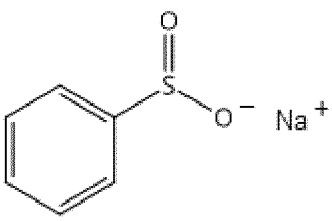

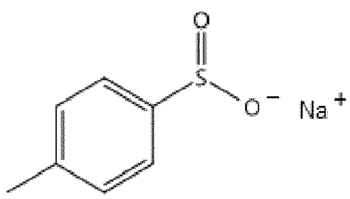

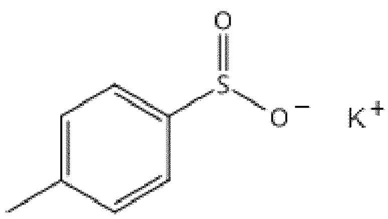

The total content of sulfinate may range from 0.1% to 5.0% by weight, preferably from 0.1 to 3.0% by weight, and more preferably from 0.2 to 1.5 % by weight, based on the total weight of the curable composition C.

<u>*Curable composition* C</u>

The curable composition C may comprise at least one additive chosen from the group consisting of catalysts, fillers, antioxidants, polymerization inhibitors, light stabilizers/UV absorbers, metal deactivators, antistatics, antifogging agents, foaming agents, biocides, plasticizers, lubricants, emulsifiers, dyes, pigments, rheological agents, impact modifiers, adhesion promoters, accelerators, optical brighteners, flame retardants , anti-seepage agents, nucleating agents, solvents, chelators, and mixtures thereof.

As an example of a plasticizing agent that can be used, mention may be made of any plasticizing agent usually

used in the field of adhesives such as for example epoxy resins, phthalates, benzoates, trimethylolpropane esters, trimethylolethane esters , trimethylolmethane esters, glycerol esters, pentaerythritol esters, napthenic mineral oils, adipates, cyclohexyldicarboxylates, paraffinic oils, natural oils (possibly epoxidized), polypropylenes, polybutylenes, hydrogenated polyisoprenes, and their mixtures.

For example, we can use:

- diisodecyl phthalate, such as for example marketed under the name PALATINOLTM DIDP by the BASF Company,
- an ester of alkylsulphonic acid and phenol, such as for example marketed under the name MESAMOLL® by the company LANXESS,
- diisononyl-1,2-cyclohexanedicarboxylate, such as for example marketed under the name HEXAMOLL DINCH® by the company BASF,
- pentaerythritol tetravalerate, such as for example marketed under the name PEVALENTM by the Company PERSTORP,
- epoxidized soybean oil such as, for example, marketed under the name VIKOFLEX® 7170 by the ARKEMA Company.

As an example of a rheology (thixotropic) agent that can be used, mention may be made of any rheology agent usually used in the field of adhesive compositions.

Preferably, the thixotropic agents are selected from:

- PVC plastisols, corresponding to a suspension of PVC in a plasticizing agent miscible with PVC, obtained in situ by heating at temperatures ranging from 60°C to 80°C. These plastisols may be those described in particular in the work "Polyurethane Sealants", Robert M. Evans, ISBN 087762-998-6,
- fumed silica, such as for example sold under the name HDK® N20 by WACKER;
- urea derivatives resulting from the reaction of an aromatic diisocyanate monomer such as 4,4'-MDI with an aliphatic amine such as butylamine. The preparation of such urea derivatives is described in particular in application FR 1 591 172;
- micronized amide waxes, such as CRAYVALLAC® SLT or CRAYVALLAC® SLA marketed by ARKEMA.

The curable composition C may also comprise at least one organic and/or mineral filler.

The usable mineral filler is advantageously chosen so as to improve the mechanical and/or tribological performance of the composition in the crosslinked state.

As an example of a usable mineral filler, any mineral filler usually used in the field of adhesive compositions can be used. These charges typically appear in the form of particles of various geometry. They can be, for example, spherical, fibrous, or have an irregular shape.

Preferably, the filler is selected from the group consisting of clay, quartz, carbonate fillers, kaolin, gypsum, clays, and mixtures thereof, preferably the filler is chosen from carbonate fillers, such as alkali or alkaline earth metal carbonates, and more preferably calcium carbonate or chalk.

These fillers can be untreated or treated, for example using an organic acid such as stearic acid, or a mixture of organic acids consisting mainly of stearic acid.

It is also possible to use hollow mineral microspheres such as hollow glass microspheres, and more particularly those made of sodium and calcium borosilicate or of aluminosilicate.

The filler may be an electrically and/or thermally conductive filler.

Among the electrically conductive fillers, we can for example cite carbon black, graphite, carbon fibers, a metal M' possibly coated by a layer of metal M", a mineral or organic filler coated by a layer of metal, and their mixtures.

Among the metals coated with a layer of metal, we can for example cite copper coated with a layer of silver.

Organic fillers can be coated with a layer of metal such as silver or copper. For example, we can cite polymethyl methacrylate (PPMA) coated with a layer of silver.

Among the thermally conductive fillers, we can for example cite carbon black powders, graphite, carbon fibers (NTC), metal oxides, metal hydroxides, metal silicates, metal sulphides, boron nitride and aluminum nitride. The metals of the metallic compounds are for example chosen from tin, indium, antimony, aluminum, titanium, iron, magnesium, zinc, etc. The electrically and/or thermally conductive charges can be found in the form of spherical particles, tubes, flakes or fibers having in particular a specific surface area ranging from 0.01 $m^2/g$ to 100 $m^2/g$.

The composition according to the invention may comprise from 0% to 95% by weight, preferably from 40% to 95% by weight, of one or more electrically and/or thermally conductive filler(s) relative to the total weight of said composition.

When a pigment is present in the composition, its content is preferably less than or equal to 3% by weight, more preferably less than or equal to 2% by weight, relative to the total weight of the composition. When present, the pigment can for example represent from 0.1% to 3% by weight or from 0.4% to 2% by weight of the total weight of the curable composition C.

The pigments can be organic or inorganic pigments.

For example, the pigment is $TiO_2$, in particular KRONOS® 2059 marketed by the company KRONOS.

The curable composition C may comprise from 0.1% to 3%, preferably 1% to 3% by weight, of at least one UV stabilizer or antioxidant. These compounds are typically introduced to protect the composition from degradation resulting from a reaction with oxygen which is likely to be formed by the action of heat or light. These compounds may include primary antioxidants that scavenge free radicals. Primary antioxidants can be used alone or in combination with other secondary antioxidants or UV stabilizers.

For example, we can cite IRGANOX ® 1010, IRGANOX ® B561, IRGANOX ® 245, IRGAFOS ® 168, TINUVIN® 328 or TINUVIN TM 770 marketed by BASF.

According to a preferred embodiment, the curable composition C does not include peroxide.

According to a preferred embodiment, the curable composition C does not comprise a quaternary ammonium salt such as for example dilauryldimethylammonium chloride or dodecyltrimethylammonium chloride.

Preferably, the curable composition C does not include a sensitizer.

In the context of the invention, and unless otherwise stated, by sensitizer is meant a compound which can pass from a non-excited state to an excited state by electromagnetic radiation, and moreover is capable, upon its return to the non-excited state, to transfer the previously absorbed energy to another compound, which in the process passes into the excited state in turn. Examples of sensitizers are dyes such as thiazine, methylene blue, thionin.

Preferably, the curable composition C is a radically polymerizable composition.

Preferably, the curable composition C comprises less than 5% by weight of alkoxysilanes, preferably less than 1 % by weight or alkoxysilanes based on the total weight of the composition.

The curable composition C may be a one part or a two-part composition.

A two-part composition C preferably comprises:

- a part A comprising:
  - the copper-based organic compound as defined above;
  - the (meth)acrylate M1 as defined above;
  - the optional halogenated carboxylic acid or phosphorous-containing compound as defined above;
  - the optional photoinitiator P1 as defined above;
- a part B comprising:
  - the sulfinate as defined above;
  - optionally (meth)acrylate M1 as defined above, being identical or different from M1 of part A.

The optional additives as defined above may be comprised in part A and/or part B.

The two-part composition C more preferably comprises:

- a part A comprising:
  - copper complex of formula (VII-2)
  - (meth)acrylate M1 having formula (V);
  - phosphorous-containing compound as defined above;
  - the optional photoinitiator P1 as defined above;
- a part B comprising:
  - the sulfinate of formula (VI);
  - optionally (meth)acrylate M1 of formula (I) as defined above.

In case the curable composition C is a one-part composition, it may result from the mixing of several parts (part A and part B as defined above), or may result from the mixing of all ingredients together.

Flow activation device / actinic radiation

According to the invention (in the uses and method as defined herein), the flow activation device is a flow device which comprises actinic radiation source(s) for irradiating a composition contained inside the device with actinic radiation.

The actinic radiation preferably includes near infrared radiation, visible light, UV radiation, electron irradiation

(Electron Beam Curing) or X-ray radiation. More preferably, the actinic radiation is a UV radiation.

The actinic radiation source may be any curing lamps known by the skilled person. Preferably, the curing lamp is selected from light-emitting diode, mercury lamp, quartz tungsten halogen light, and Electron-beam lamp. Preferably, the flow activation device comprises one or several light-emitting diodes UV.

Preferably, the actinic radiation is carried out with a light-emitting diode UV.

The UV radiation has preferably a wavelength ranging from 100 to 450nm, more preferably from 300 to 405 nm.

The UV radiation has preferably a wavelength of UV-A ranging from 315 to 405 nm.

Any flow activation device may be used, such as for example the ones disclosed in WO08125375 or DE10045994.

The flow activation device preferably comprises a conduit.

The conduit may comprise an optical material. The optical material may transmit, diffuse or reflect the actinic radiation. Preferably, the suitable optical material transmits at least 1%, more preferably more than 20% of the actinic radiation at the thickness of the conduit wall t. The optical material is typically selected with regard to the characteristics of the curing lamp. For example, for 405nm LED curing lamp, a material with suitable transmission may be Plexiglas® V825-100 at a thickness of 3 mm.

The actinic radiation source (for example curing lamp(s)) may be positioned on any portion of the conduit wall of the flow activation device. The curing lamp may optionally have one or several optical elements in order to direct the light to the curable composition C inside the conduit. Optical elements include but are not limited to lenses, reflectors, light guides, and diffusors.

The conduit itself may be an optical element and/or light guide engineered to guide the actinic radiation from the curing lamp to the curable composition C within the conduit through optical engineering principles known to those skilled in the art, and may include but are not limited to features such as extraction features (e.g. microprismatic features, microdots), mirrors and lenses.

The conduit preferably comprises a mixing element, in particular selected from static mixing elements and dynamic mixing elements. The mixing element may comprise a material that reflects the actinic radiation.

The static mixing element may include but are not limited to a helical static mixer or a wafer mixer. The dynamic mixing element may be an eccentric screw pump.

The flow activation device preferably comprises a storage container in order to store the curable composition C. In case the curable composition C is a two-part curable composition (part A and part B), the flow active device comprises two storage containers for each part of the two-part curable composition. The storage container(s) are preferably connected to the conduit of the flow activation device.

The flow activation preferably comprises a metering system. The metering system typically allows the control of the dispensation of the curable composition C from the storage container(s) to the conduit, and through the conduit.

The metering system may comprise positive rod displacement, piston pump, gear pump, screw pump, peristaltic pump, pump/gear metering, pneumatics, or another metering technology known to those skilled in the art.

The flow activation device may comprise one or several valves between the storage container(s) and the conduit, and/or between the end of the conduit and the dispensing tip.

The actinic radiation preferably includes near infrared radiation, visible light, UV radiation, electron irradiation (Electron Beam Curing) or X-ray radiation, more preferably UV radiation.

The actinic radiation dose preferably ranges from 10 mJ/cm$^3$ to 1,000,000 mJ/cm$^3$, more preferably from 1,000 mJ/cm$^3$ to 10,000 mJ/cm$^3$. The actinic radiation dose may be adjusted by increasing the radiation time and/or by increasing the radiation intensity.

The actinic radiation dose may be determined easily by the skilled person. It can for example be measured by the following equation:

$$[\text{Irradiance}]*[\text{Aperture area}]/[\text{Volumetric Flow Rate}] = \text{actinic radiation (in J/cm}^3\text{)}$$

- the irradiance being in W/cm$^2$ (typically obtained from actinic radiation source)
- the aperture area being in cm$^2$ (for example the actinic radiation source transmits through the aperture area in the flow activation device)
- volumetric flow rate being in cm$^3$/sec.

<u>Substrate</u>

The substrate may be transparent or opaque.

The substrate may be selected from plastics such as for example PVC, polycarbonates (PC), polymethylmethacrylate (PMMA), polyesters, epoxy resins, acrylonitrile butadiene styrene terpolymers (ABS); inorganic substrates such as

for example metals, concrete, ...

If the method is a method for the bonding of substrate, then it preferably comprises step iv) of joining with a second substrate within the pot life of the curable composition C.

Steps of the method

The variation of the actinic radiation dose in step iii) may be an increase or a decrease of said dose. The variation of step iii) may be controlled electronically via a control unit.

The increase of the actinic radiation dose preferably leads to an increase of the temperature and/or the viscosity of the curable composition C.

Step ii) may be carried out to obtain a deposit layer ranging from 0.05 to 100 mm thickness, preferably from 0.05 to 10 mm, even more preferably from 0.05 to 1 mm.

The dispensing step ii) may last from 5 s to 5 h.

The curable composition C as defined herein may be prepared before its use in the flow activation device, or it can be prepared within the flow activation device for example when the flow activation device comprises storage containers or mixing elements.

The optional step iii) relative to the variation of the actinic radiation dose may be carried out during step i) and/or during step ii).

Preferably, the step iii) is carried out during step i).

The step iii) advantageously allows to control the pot life by increasing or decreasing the actinic radiation dose, without changing the curable composition C (ingredients, weight content ...). For example, by increasing the actinic radiation dose during dispensing it advantageously decreases the pot life and curing time of the curable composition C, allowing to increase the manufacturing rate. It is advantageously possible to reach full curing at the same time of all of the curable composition used for the bonding of a large article (for example a television screen or other large surface) at the end of the dispensing : full curing can be obtained at the same time between the curable composition C that is dispensed first and the curable composition C that is dispensed last.

The pot life may advantageously be controlled instantaneously by the end user implementing the method of the invention, affording a greater manufacturing flexibility.

**Examples:**

The following ingredients were used:

- Visiomer®BNMA commercialized by EVONIK is Benzyl methacrylate (N°CAS 2495-37-6)
- HEMA commercialized by SIGMA ALDRICH is 2-Hydroxyethyl Methacrylate (N°CAS 868-77-9)
- $Cu(acac)_2$ is acetylacetanate copper II (N°CAS 13395-16-9) commercialized by SIGMA ALDRICH;
- Phosphorous-containing compound G: mixture comprising Phosphoric acid, bis(2-(methacryloyloxy)ethyl) hydrogen phosphate and 2-(methacryloyloxy)ethyl dihydrogen phosphate
- Sodium p-toluene sulfinate (n°CAS 824-79-3) is commercialized by SIGMA ALDRICH;
- Aerosil® R 202 is a treated fumed silica commercialized by EVONIK.

**Example 1 : preparation of the curable composition n°1**

The part A of the curable composition was prepared by mixing of the ingredients at 20 °C.

The part B of the curable composition was prepared by mixing of the ingredients at 20 °C.

The proportion of the ingredients of each part are mentioned in the following table:

| Composition n°1 | | | | | |
|---|---|---|---|---|---|
| Part A | | | Part B | | |
| ingredients | % by weight (based on total weight of part A) | | ingredients | % by weight (based on total weight of part B) | |
| HEMA | 82.0 | | Visiomer®BNMA | 92 | |
| $Cu(acac)_2$ | 0.6 | | Sodium p-toluene sulfinate | 1.8 | |
| Methacrylic acid | 5 | | Aerosil® R 202 | 6.2 | |

(continued)

| Composition n°1 | | | | | |
|---|---|---|---|---|---|
| Part A | | | Part B | | |
| **ingredients** | **% by weight (based on total weight of part A)** | | **ingredients** | **% by weight (based on total weight of part B)** | |
| Phosphorous-containing compound G | 3.7 | | | | |
| Aerosil® R 202 | 8.7 | | | | |
| TOTAL | 100 | | TOTAL | 100 | |

The two parts were introduced into a 50 mL 1:1 dual cartridge syringe in separate chambers.

**Example 2 : Dispensing**

A flow activation device comprising a syringe pump (Havard Appartus PHD Ultra), a dual cartridge syringe comprising the curable composition of example 1 (each part A and B being separated within the cartridge), a static mixer (Sulzer Mixpac Static Mixer MBQ 05-24L) attached to the outlets of the dual cartridge syringe said static mixer comprising a UV LED lamp (Panasonic ANUJ6181 Aicure 365nm Spot Type LED), fixed directly to the sidewall, in the orientation that permits light to pass into the static mixer.

The syringe pump was set to a volumetric flow rate such that the total mass flow rate was 6 $cm^3$/min. The radiation intensity of UV LED lamp light passing through one sidewall of the static mixer was measured. Accordingly, the UV dose was tested at 4.5, 9.0, and 18 J/$cm^3$. Before collecting material, the device was purged with 10 mL of the curable composition of example 1, and the purge material was discarded. After the purge step, the dispensed curable composition was collected into a plastic container equipped with a thermocouple. As the composition cured, the temperature increased due to the reaction exotherm which was recorded with a thermocouple. The peak exotherm is defined as the first recorded time at which the temperature exceeds 120 °C.

The time/temperature profiles were performed using an industrial infrared thermometer Omega OS552-V1-6 (Omega Engineering® Inc, Stamford, CT) with precision of $\pm$ 1°C for 2g (around 4.0 mm of high) and 0.25g (1.4 mm of high) of polymerization.

Figure 1 describes the profiles time/temperature for one composition according to 3 aspects :4.5, 9.0, and 18.0 J/$cm^3$ UV dose (365 nm LED).

The results are gathered in the following table:

| Radiation Dose | 4.5 J/$cm^3$ actinic radiation (invention) | 9.0 J/$cm^3$ actinic radiation (invention) | 18.0 J/$cm^3$ actinic radiation (invention) |
|---|---|---|---|
| Time to Exotherm > 120 °C (in min) | 24 | 20 | 17 |

The results demonstrates that the adhesive cure time (and thus the pot life) advantageously decreases with increasing actinic radiation dose.

Besides, advantageously, the curable composition of example 1 does not cure within the flow activation device when submitted to actinic radiation, and does not require an additional step of curing to reach full curing.

**Example 3 : Bonding**

A bonding time test using the curable composition described in Example 1 and the flow activation device described in Example 2 was performed according to the following steps:

- The flow activation device of Example 2 was purged with 10 $cm^3$ of the curable composition from Example 1, and the purge material was discarded
- Immediately after the purge, the curable composition of Example 1 was dispensed with actinic radiation dose of 9.0 J/$cm^3$ onto a first glass microscope slide (25 x 76 x 3 mm) with 250 $\mu$m gauges around a bonding area of 25 mm x 25 mm.

- A second glass microscope slide (25 x 76 x 3 mm) was affixed to the first glass microscope slide having the pre-activated curable composition of Example 1. The glass slides were positioned such that the dispensed curable composition was evenly distributed within the bonding zone created by the gauges (25mm x 25mm x 250 μm).

- The time after affixing the glass microscope slides together at which it is no longer possible to move the two glass microscope slides relative to one another was recorded as the bonding time

The results of the bonding time tests are summarized in the table below:

| Device | UV Dose (LED 365nm) | Bonding Time |
|---|---|---|
| Flow Activation Device | 9.0 J/cm3 | 27.0 min |

## Claims

**1.** Use of a curable composition C in a flow activation device for the bonding, sealing or coating of substrate, wherein the curable composition C comprises:

- a (meth)acrylate compound;
- a sulfinate ;
- copper-based organic compound.

**2.** Use according to claim 1, wherein the sulfinate is compound having formula (VI)

$$[R^a\text{-}SO_2^-]_p,\ Q^{p+} \quad (VI)$$

wherein :

- $R^a$ represents an aryl group or a heteroaryl group, said aryl or heteroaryl groups being optionally substituted by at least one substituent selected from : F, OH, C(O)OMe, NHC(O)Me, methyl (Me), $CF_3$, OH or $SO_2^-$;
- Q represents Li, Na, K or Zn, preferably Na or K ;
- p represents 1 or 2.

**3.** Use according to anyone of claim 1 or 2, wherein the curable composition C is a radically polymerizable composition.

**4.** Use according to anyone of claims 1 to 3, wherein the curable composition C comprises less than 5% by weight of alkoxysilanes, preferably less than 1 % by weight or alkoxysilanes based on the total weight of the composition.

**5.** Use according to anyone of claims 1 to 4, wherein the curable composition C comprises a phosphorous-containing compound, said phosphorous-containing compound having preferably the following formula $P(O)(OR^b)(OR^c)(OR^d)$, wherein $R^b$, $R^c$ or $R^d$ may be, independently of each other, a hydrogen, an alkyl, an aryl, a heteroaryl, a alkenyl, a cycloalkyl, said alkyl, aryl, heteroaryl, alkenyl, cycloalkyl being optionally substituted.

**6.** Use according to claim 5, wherein at least one of $R^b$, $R^c$ or $R^d$ is hydrogen.

**7.** Use according to anyone of claims 1 to 6, wherein its pot life is controlled by changing the dose of actinic radiation.

**8.** Use according to anyone of claims 1 to 7, wherein the curable composition C is a one part or a two-part composition.

**9.** Method for the bonding, sealing or coating of substrate, said method comprising the following steps:

- i) irradiating a curable composition C within a flow activation device with actinic radiation ;
- ii) dispensing the curable composition C onto a first substrate;
- iii) optionally varying the actinic radiation dose before and/or during step ii);

- iv) optionally joining with a second substrate within the pot life Y of the curable composition C;

wherein the curable composition C comprises:

◦ a (meth)acrylate compound;
◦ a sulfinate;
◦ copper-based organic compound.

**10.** Method according to claim 9, wherein the sulfinate is a compound having formula (VI)

$$[R^a\text{-}SO_2^-]_p, Q^{p+} \quad \text{(VI)}$$

wherein :

- $R^a$ represents an aryl group or a heteroaryl group, said aryl or heteroaryl groups being optionally substituted by at least one substituent selected from : F, OH, C(O)OMe, NHC(O)Me, methyl (Me), $CF_3$, OH or $SO_2^-$;
- Q represents Li, Na, K or Zn, preferably Na or K ;
- p represents 1 or 2.

**11.** Method according to anyone of claim 9 or 10, wherein the curable composition C is a radically polymerizable composition.

**12.** Method according to anyone of claims 9 to 11, wherein the curable composition C comprises less than 5% by weight of alkoxysilanes, preferably less than 1 % by weight of alkoxysilanes based on the total weight of the composition.

**13.** Method according to anyone of claims 9 to 12, wherein the method does not comprise an additional secondary curing step such as for example moisture cure step, heating step.

**14.** Method according to anyone of claims 9 to 13, wherein the method comprises a step i') of setting the dose of the actinic radiation previous to step i).

**15.** Method according to anyone of claims 9 to 14, wherein the actinic radiation includes near infrared radiation, visible light, UV radiation, electron radiation or X-ray radiation, preferably UV radiation.

**16.** Method according to anyone of claims 9 to 15, wherein the activation radiation dose ranges from 10 $mJ/cm^3$ to 1 000 000 $mJ/cm^3$, more preferably from 1 000 $mJ/cm^3$ to 10 000 $mJ/cm^3$.

**17.** Method according to anyone of claims 9 to 16, wherein the curable composition C comprises a phosphorous-containing compound, said phosphorous-containing compound having preferably the following formula $P(O)(OR^b)(OR^c)(OR^d)$, wherein $R^{b,}$ $R^{c\ or}$ $R^d$ may be, independently of each other, a hydrogen, an alkyl, an aryl, a heteroaryl, a alkenyl, a cycloalkyl, said alkyl, aryl, heteroaryl, alkenyl, cycloalkyl being optionally substituted.

Europäisches Patentamt
European Patent Office
Office européen des brevets

# EUROPEAN SEARCH REPORT

Application Number
EP 23 30 7041

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | ARAR AHMAD ET AL: "Peroxide-free redox initiating systems for polymerization in mild conditions", POLYMER CHEMISTRY, vol. 12, no. 12, 1 January 2021 (2021-01-01), pages 1816-1822, XP093017223, Cambridge ISSN: 1759-9954, DOI: 10.1039/D1PY00172H<br>* abstract *<br>* Scheme 1 *<br>* Results and discussions *<br>----- | 1-17 | INV.<br>C08F2/48<br>C09J4/00<br>C08F4/40<br>C08F220/18<br>C09J133/06 |
| Y | Delo: "ACTIVATION ON THE FLOW", , 16 November 2022 (2022-11-16), pages 1-12, XP093164136, Retrieved from the Internet: URL:https://www.delo-adhesives.com/fileadmin/files/brochures/en/delo_dispensing_of_lightcuring_adhesives_activation_on_the_flow-en.pdf [retrieved on 2024-05-17]<br>* the whole document *<br>----- | 1-17 | |
| | | | **TECHNICAL FIELDS SEARCHED (IPC)** |
| | | | C08F<br>C09J<br>C09D |

The present search report has been drawn up for all claims

| Place of search | Date of completion of the search | Examiner |
|---|---|---|
| The Hague | 17 May 2024 | Fernandez Recio, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

1

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- FR 1591172
- WO 08125375 A
- DE 10045994


### Non-patent literature cited in the description


- **ROBERT M. EVANS**. *Polyurethane Sealants*, ISBN 087762-998-6
- *CHEMICAL ABSTRACTS*, 2495-37-6
- *CHEMICAL ABSTRACTS*, 868-77-9
- *CHEMICAL ABSTRACTS*, 13395-16-9
- *CHEMICAL ABSTRACTS*, 824-79-3